# EUROPEAN PATENT APPLICATION

(11) **EP 4 418 221 A1**
(43) Date of publication of application: **21.08.2024**
(21) Application number: 23186938.9
(22) Date of filing: 21.07.2023
(51) Int. Cl.: G07C 9/00

(54) **SIGNAL FORWARDING METHOD FOR A BUILDING MANAGEMENT SYSTEM**

(30) Priority: 20.02.2023 EP 23157529; 04.04.2023 EP 23166638; 04.04.2023 EP 23166637
(71) Applicant: dormakaba Schweiz AG, 8623 Wetzikon (CH)
(72) Inventor: DUETSCHLER, Urs, 8620 Wetzikon (CH); MELI, Louis Marcel, 8700 Kuesnacht (CH)
(74) Representative: Balder IP Law, S.L.

(57) **Abstract**

According to a first aspect of the present invention, a computer-implemented signal forwarding method for a building management system, hereinafter referred to as BMS, is provided. The method may be performed at least by a signal forwarding BMS-point. The signal forwarding BMS-point may comprise energy harvesting means. The method may comprise harvesting energy, e.g. by the energy harvesting means. The method may comprise providing the harvested energy to the signal forwarding BMS-point. The method may comprise receiving, e.g. by the signal forwarding BMS-point, a first signal. The method may comprise sending, e.g. by the signal forwarding BMS-point, a second signal. The second signal may be based on the first signal. The second signal may preferably correspond to the first signal.

## Description

### FIELD OF THE INVENTION

The present invention relates to a signal forwarding method for a building management system, in particular to energy-efficient methods. Further, the present invention relates to a building management system and a signal forwarding building management system point. Further, the present invention relates to corresponding computer programs.

### BACKGROUND OF THE INVENTION

Building management systems, in the following also referred to as BMS, have become widely used for controlling technical systems of a building, such as HVAC (heating, ventilation and air conditioning), electrical, lighting, shading, access control, security systems and other interrelated systems. A BMS may be an automatic centralized control of a building's technical functions. In particular, a BMS may comprise an access control system. A building controlled by a BMS may be referred to as a "smart building".

As an example, a building management system may comprise a keyless entry system. Keyless entry systems are advantageous due to their convenience and/or reliability. Keyless entry systems may for example operate in that an BLE (Bluetooth Low Energy) or UWB (Ultra-Wideband) access control terminal executes a wireless communication with an authentication device, such as a keyless fob, a keycard or an authentication medium incorporating a corresponding wireless transceiver. Once said wireless communication between the access control terminal and the authentication medium has been executed, the access control terminal exchanges data messages with the authentication medium. The authentication can be initiated either by a user, for instance by pressing a button on the authentication medium to trigger transmission of authentication data to the access control terminal. Upon successful authentication, i.e. verification of user credentials (e.g. by correlating authentication data received from the authentication device with a list of authorized users), the access control terminal grants access to the user in possession of the respective authentication medium, e.g. by opening said barrier. On the other hand, if the authentication fails, the access control terminal denies access to the user in possession of the respective authentication medium, e.g. by locking the barrier/ by keeping the barrier locked.

For close-range applications, a radio-frequency identification (RFID) transponder (or tag) is often used, which has mostly replaced earlier magnetic stripe cards. Other current solutions use infra-red systems or radio systems to transmit an authenticating signal from an authentication medium to an access control terminal of a security control system. Close proximity keyless systems (i.e. between direct contact and a threshold of a few centimeters), for example RFID based systems, allow determination of a user's proximity to a barrier by appropriate placement of a reader of the access control terminal. However, as their name implies close-proximity keyless systems suffer from the disadvantage that they require a very close proximity of the authentication medium to the access control terminal. In order to overcome this disadvantage, mid-range keyless entry systems have been proposed, in particular based on BLE and/or UWB communication. UWB systems are advantageous since they allow reliable mid-range communication without a user having to precisely identify the reader device. As the communicating range between an authentication device and an UWB access control terminal increases, the convenience and ease-of-use increases, because the authentication medium does not need to be placed in very close range, such as less than one centimeter from the UWB access control terminal. The user no longer needing to precisely locate the UWB access control terminal (or its antenna) not only adds convenience but also has the potential to speed up the process, thereby increasing the throughput through a barrier.

The network topologies of said access control systems typically comprise a central access rights server to which each access control terminal is connected. An authentication medium held by a user is brought close to an access control terminal for wireless exchange of credentials. These credentials are then transmitted from the access control terminal to the server, which performs a look-up in a database of access rights. If access is granted, the server sends a signal to the access control terminal, which allows the user access through an electronically controlled doorway. The disadvantage of this topology is that it requires each access control terminal to be permanently connected to the server, which is associated with considerable cost in wiring and presents a single point of failure. More modern access control systems have relegated access control decisions to the access control terminals themselves. If these access control terminals are not connected to the server, however, the issue then arises of how and when to update the database of access rights in each access control terminal.

Other access rights systems invert the situation by storing a database or table of the user's access rights in the mediums themselves. At an access control point, the access control terminals and the authentication medium exchange data containing an identifier of the access control terminal and the user's access rights at that access control point. Authentication mediums are however vulnerable entities with respect to data protection. Further, updating access rights becomes cumbersome as every affected party must have its authentication medium updated with new access rights.

Also other BMS that do not necessarily comprise an access control system may have a similar topology comprising a centralized server and several terminals connected to that server.

None of the known concepts provides an energy-efficient and at the same time easy-to-use solution for a signal forwarding method. Therefore, there is a need for such a solution.

### SUMMARY OF THE INVENTION

It is an object of the present invention is to provide a signal forwarding method for a building management system, a building management system and a signal forwarding building management system point, which at least partially overcome the above-mentioned disadvantages. In particular, it is an object of the present invention to provide a signal forwarding method for a building management system which is energy-efficient and intuitive to use.

According to the present invention, the above-mentioned objects are addressed through the features of the independent claims. In addition, further advantageous embodiments follow from the dependent claims and the description.

According to a first aspect of the present invention, a computer-implemented signal forwarding method for a building management system, hereinafter referred to as BMS, is provided. The method may be performed at least by a signal forwarding BMS-point. The signal-forwarding BMS-point may comprise energy harvesting means. The method may comprise harvesting energy, e.g. by the energy harvesting means. The method may comprise providing the harvested energy to the signal forwarding BMS-point. The method may comprise receiving, e.g. by the signal forwarding BMS-point, a first signal. The method may comprise sending, e.g. by the signal forwarding BMS-point, a second signal. The second signal may be based on the first signal. The second signal may preferably correspond to the first signal.

The method may allow to forward signals. This may advantageous, e.g. if an designated recipient of a signal is out of a reach of a sender of the signal. Otherwise, it could be impossible for the sender to reach the designated recipient. In turn, the designated recipient, e.g. an enforcement BMS-point configured to cause operation of an action BMS-point, i.e. to cause operation of a BMS function, might not be fully functional or might be dysfunctional. Signal forwarding may prevent limited functionalities/dysfunctionalities.

Signal forwarding may also allow to reduce the signal amplitude, which may be advantageous e.g. in terms of energy efficiency. Limiting the amplitude of signals may also be necessary due to legal regulations.

Energy harvesting may allow to operate the signal forwarding BMS-point without the need of additional wiring works, and e.g. independently of the power grid. This may keep the installation effort low. It may also increase the reliability and decrease the risk of failure due to the signal forwarding BMS-point running out of energy. The need of maintenance may be reduced. In other words: A signal forwarding BMS-point that is configured to perform the above signal forwarding method essentially only needs maintenance in case it is damaged or in case it runs out of energy.

The method may be performed by a BMS. The BMS may comprise at least the signal forwarding BMS-point.

The BMS may comprise an HVAC system (heating, ventilation and air conditioning) and/or an electrical system and/or a lighting system and/or a shading system and/or an access control system and/or a security system and/or other interrelated systems. The BMS may be a centralized control of a building's technical functions. The BMS may be automated. The BMS may comprises sensor devices.

The second signal may e.g. be similar to the first signal. The second signal may e.g. be identical to the first signal. The second signal may e.g. comprise identical information as comprised in the first signal. The second signal e.g. may be an amplification of the first signal. The second signal e.g. may have same properties/same signal-characteristics as compared to the first signal. The second signal may comprise information also comprised in the first signal.

The second signal does not need to be identical to the first signal, i.e. the second signal may be different from the first signal.

The first signal may be based on a sensor signal of a sensor device. The sensor device may be configured to detect sensing information. The sensor signal may comprise the sensing information. The sensing information may be related to a BMS function. E.g., a brightness sensor may detect that a brightness level surpassed a pre-determined brightness threshold, which may indicate a potential need to turn on lighting. E.g., a movement sensor may detect a movement, which may indicate a potential need to turn on lighting. E.g., a temperature sensor may detect that a temperature level exceeded/dropped below a predetermined temperature level, which may indicate a potential need to increase or decrease a temperature.

The signal forwarding BMS-point may e.g. be understood/may act as a repeater of the first signal. The second signal being based on the first signal e.g. may be understood as a forwarded first signal. The method may be understood as a "signal forwarding method" in the sense that information comprised in the first signal may be forwarded by means of the second signal.

The energy harvesting means may comprise an energy storage. Preferably, the energy harvesting means may comprise a solar cell and/or a motion-energy based energy generator. Preferably, the signal forwarding BMS-point may be not connected to a power grid.

The signal forwarding BMS-point may be independent from a power grid. The solar cell may be an indoor solar cell. The energy storage may be a battery. The solar cell may be configured to transform ambient light into electrical energy. The energy harvesting means, e.g. the solar cell, may be configured to charge the energy storage by the harvested energy.

The first signal may be received from an authentication medium, preferably a mobile device or a physical keycard, and/or from a decision BMS-point and/or from a sensor device.

The BMS may comprise the authentication medium and/or the decision BMS-point and/or the sensor device.

The method may comprise sending, by an authentication medium, the first signal.

The first signal may be received from an authentication medium/the first signal may be send by an authentication medium. The first signal may include a credential. In some embodiments of the present invention, a validity of the credential may be determined prior to sending the first signal, e.g. by the authentication medium. Sending the first signal, e.g. by the authentication medium, may only be performed upon determining that the credential is valid.

The method may comprise sending, by a sensor device, the first signal. The first signal may comprise sensing information detected by the sensor device. The sensing information may be related to a BMS function, e.g. the sensing information may comprise brightness information and/or temperature information and/or movement information.

The first signal may be received from a sensor device. The sensor device may be configured to detect sensing information. E.g., a brightness sensor may detect that a brightness level surpassed a pre-determined brightness threshold, which may indicate a potential need to turn on lighting. E.g., a movement sensor may detect a movement, which may indicate a potential need to turn on lighting. E.g., a temperature sensor may detect that a temperature level exceeded/dropped below a predetermined temperature level, which may indicate a potential need to increase or decrease a temperature.

The second signal, based on the first signal sent by/received from an authentication medium or a sensor device, may be received by a decision BMS-point. This may allow the decision BMS-point to generate a signal, e.g. an instruction signal, based on the first signal sent by/received from an authentication medium or a sensor device, e.g. based on a credential or based on sensing information comprised in the first signal. The instruction signal may be designated to an enforcement BMS-point to cause operation of a corresponding action BMS-point, e.g. based on the instruction signal which may be based on the credential or based on the sensing information.

The method may comprise receiving, by a decision BMS-point, a zeroth signal from an authentication medium or from a sensor device, and sending the first signal, by the decision BMS-point, e.g. based on the zeroth signal. The first signal may e.g. be based on the credential or based on the sensing information comprised in the zeroth signal.

In some embodiments of the present invention, a validity of the credential may be determined, e.g. by the decision BMS-point, e.g. prior to sending the first signal. Sending the first signal, e.g. by the decision BMS-point, may only be performed upon determining that the credential is valid.

The decision BMS-point may e.g. generate the first signal based on the zeroth signal, e e.g. based on a credential or based on sensing information comprised in the zeroth signal.

The authentication medium may be a token, a badge, a mobile device, the user's body or a part of a user's body, e.g., being suitable for biometric detection, or the like. In case if the authentication medium is a user's body or a part of a user's body, a decision BMS-point may perform camera tracking in order to determine whether the user intends to operate a respective action BMS-point. Further, a decision BMS-point may perform biometric authentication in order to check whether a respective user is allowed to operate a respective action BMS-point. Biometric authentication may include for example face recognition, iris recognition or the like.

The validity of the credential may be determined using the authentication medium, e.g. by using a finger print sensor, e.g. of a smartphone, and/or by unlocking a lock screen. The validity of the credential may be determined by the decision BMS-point.

It may be provided that the validity of the credential to operate a respective action BMS-point is verified by a backend server with which e.g. a decision BMS-point and/or the authentication medium may communicate.

The first signal may be received from a decision BMS-point. The decision BMS-point may be configured to receive a signal of an authentication medium of a user. The decision BMS-point may be configured to determine an intent of the user to operate the action BMS-point, e.g. upon receiving the signal of the authentication medium. The decision BMS-point may be configured to generate the first signal, which may e.g. be designated to an enforcement BMS-point corresponding to the respective action BMS-point, e.g. upon determining the intent of the user.

The term decision BMS-point may include any kind of BMS controller which is capable to decide whether an action BMS-point should be operated or not. The decision BMS-point may be capable of determining an intent to operate an action BMS-point. Further, the decision BMS-point may be capable of checking the validity of a user's credential. A decision BMS-point may comprise an integrated and/or spaced apart tracking system which is capable of tracking a position of a user's authentication medium. Examples for said tracking systems are camera tracking systems and/or ultra-wideband tracking systems. In case if the decision BMS-point comprises an ultra-wideband tracking system, the ultra-wideband tracking system may include a plurality of ultra-wideband anchors facilitating ranging of the authentication medium, in particular to determine successive positions of the authentication medium. Thus, a decision BMS-point according to embodiments of the present invention may include an identification module which may be configured to verify a credential and/or an intent detection module which may for example track the user as described above, e.g. in order to determine the user's intent, e.g. to access. A BMS may comprise a plurality of modules. The modules may be arranged spaced apart from each other and communicating with each other.

A decision BMS-point may comprise an integrated and/or spaced sensor system which is capable of detecting sensing information that may be related to a BMS function.

The decision BMS-point may be connected to a power grid and/or may comprise a battery which is regularly to be replaced in order to prevent the decision BMS-point from running out of energy. In a particular embodiment, the decision BMS-point may be connected to a power grid and additionally comprise a battery in order to buffer potential blackouts in the power grid. The decision BMS-point then advantageously may be capable of temporarily work during a blackout of a power grid.

The decision BMS-point may be configured to communicate wirelessly with the signal forwarding BMS-point. A BMS may include more than one decision BMS-point and e.g. a plurality of enforcement BMS-points and e.g. a plurality of signal forwarding BMS-points. The number of enforcement BMS-points comprised in the BMS may be larger than the number of decision BMS-points comprised in the BMS. The number of signal forwarding BMS-points comprised in the BMS may be larger than the number of decision BMS-points comprised in the BMS.

The communication between the decision BMS-point and the signal forwarding BMS-point e.g. may be performed wirelessly, e.g. via a low power communication protocol, such as Bluetooth Low Energy (BLE) or any other suitable low power communication protocols.

The decision BMS-point may be configured to determine an intent of the user, e.g. to determine an intent of the user upon receiving the signal of the authentication medium.

The first signal e.g. may be sent from a decision BMS-point. The first signal e.g. may be sent from an authentication medium, e.g. a user device, e.g. a mobile device, and/or by a user, e.g. via NFC or BLE.

The signal forwarding method may be performed at least by the signal forwarding BMS-point and by a second signal forwarding BMS-point. The second signal forwarding BMS-point may comprise energy harvesting means. The method may further comprise receiving, by the second signal forwarding BMS-point, the second signal. The method may further comprise sending, by the second signal forwarding BMS-point, a third signal. The third signal may be based on the second signal. The third signal may preferably correspond to the second signal.

The method may be performed by a BMS comprising at least the signal forwarding BMS-point and the second signal forwarding BMS-point.

In this way, signals may be sent until the designation enforcement BMS-point is reached, such that the corresponding action BMS-point may be operated.

The signal forwarding BMS-point may be operable in a low-power mode and in an active mode. The signal forwarding BMS-point being in the low-power mode may be configured to operate at a lower power consumption as compared to a power consumption of the signal forwarding BMS-point being in the active mode. The signal forwarding BMS-point may comprise a receiver configured to receive a signal. The signal forwarding BMS-point may comprise a transmitter configured to send a signal. In the low-power mode of the signal forwarding BMS-point, the transmitter may be inactive. In the low-power mode of the signal forwarding BMS-point, the receiver may be active. In the active mode of the signal forwarding BMS-point, the transmitter may be active. The method may further comprise, e.g. upon receiving the first signal, switching the signal forwarding BMS-point from the low-power mode into the active mode. Sending the second signal may be performed by the active transmitter of the signal forwarding BMS-point, e.g. being in the active mode.

Allowing the signal forwarding BMS-point to remain in the low-power mode, when it is not needed/when it is not intended to send a second signal, may decrease the power consumption of signal forwarding BMS-point. Decreasing the power consumption of the signal forwarding BMS-point may increase the reliability and decrease the risk of failure due to the signal forwarding BMS-point running out of energy. Energy harvesting means need to provide less energy and may be manufactured more cost-efficient. The need of maintenance is reduced. In other words: A signal forwarding BMS-point that is configured to perform the above signal forwarding method essentially only needs maintenance in case it is damaged or in case it runs out of energy.

The low-power mode of the signal forwarding BMS-point may be a low-power receiving mode in which the signal forwarding BMS-point preferably only responds/takes action upon receiving a signal.

E.g. when being active, the receiver may be able/may be configured to receive a signal. E.g. when being active, the transmitter may be able/may be configured to send a signal. E.g. when being inactive, the receiver may not be able/may not be configured to receive a signal. E.g. when being inactive, the transmitter may not be able/may not be configured to send a signal.

An inactive component may be a sleeping component and/or a deactivated component. E.g., the transmitter being inactive may be the transmitter when sleeping/when being deactivated. An inactive component may be in a non-operating state. An active component may be in an operating state. The transmitter being inactive may be not able to send a signal, e.g. a second signal.

An inactive component may have a lower power consumption as compared to the component being active.

The signal forwarding method may be performed by a BMS. The BMS may comprise at least the signal forwarding BMS-point, an enforcement BMS-point and an action BMS-point. The action BMS-point may preferably comprise an actuator. The action BMS-point may preferably comprise a lock, e.g. an electronic lock. The enforcement BMS-point may be configured to cause operation of the action BMS-point. The enforcement BMS-point may comprise a receiver. The method may further comprise receiving the second signal, e.g. by the receiver of the enforcement BMS-point. The method may preferably further comprise causing, e.g. by the enforcement BMS-point, operation of the action BMS-point, e.g. according to the second signal.

The lock may comprise the actuator.

The second signal may be an instruction signal, i.e. the second signal may comprise an instruction for the enforcement BMS-point to cause operation of the action BMS-point.

The term enforcement BMS-point may include any device that is capable of causing operation of an action BMS-point, e.g. causing unlocking and/or locking in case of an action BMS-point comprising an access point. In particular, the enforcement BMS-point may not have decision taking capabilities for deciding whether to cause operation of an action BMS-point, e.g. based on the validity of a credential. Rather, the enforcement BMS-point may be capable of causing operation of a respective action BMS-point upon receiving a respective command/signal/instruction. Each enforcement BMS-point may be associated to/may have an action BMS-point. Each action BMS-point may be associated to/may have an enforcement BMS-point. Thus, in other words, the enforcement BMS-point may be understood as a stupid device which may only execute commands without taking any decision on causing operation of a respective action BMS-point. Further, the enforcement BMS-point may be capable of low-power wireless communication in order to receive said commands/signals/instruction, in particular from one or more decision BMS-points and/or from an authentication medium. Due to this configuration of the enforcement BMS-point, the enforcement BMS-point may be operated with a very low energy consumption. This is beneficial because the need for maintenance is significantly reduced. In other words: A enforcement BMS-point essentially only needs maintenance in case if it is damaged or in case if it runs out of energy. The enforcement BMS-point may not be connected to a power grid in order to keep the installation effort low.

The enforcement BMS-point may be configured to cause operation of a plurality of action BMS-points. E.g., the enforcement BMS-point may be configured to cause operation of a lighting point and to cause operation of an access point. The enforcement BMS-point may comprise a plurality of action BMS-points.

The enforcement BMS-point may be a low-power enforcement BMS-point.

It may be provided that an enforcement BMS-point causes operation of an associated action BMS-point e.g. upon receiving an operation-command from a decision BMS-point, e.g. via signal forwarding BMS-point. The enforcement BMS-point may therefore include means for performing/causing operation.

The enforcement BMS-point may comprise a sensor device. The sensor device may be configured to detect sensing information, which may be related to a BMS function, e.g. to a BMS function of the action BMS-point that corresponds to the enforcement BMS-point. E.g., an enforcement BMS-point configured to cause operation of an action BMS-point comprising a lighting point may comprise a brightness sensor. E.g., an enforcement BMS-point configured to cause operation of an action BMS-point comprising an air conditioning point may comprise a temperature sensor.

The enforcement BMS-point/ the respective sensor device of the enforcement BMS-point may send the first signal, e.g. containing sensor information, to the signal-forwarding BMS-point. The signal forwarding BMS-point may send the second signal, based on the first signal, e.g. to a decision BMS-point.

The enforcement BMS-point may be a controller of a corresponding action BMS-point.

The action-BMS point may be a device/apparatus that is configured to perform a building management function, e.g. providing/allow access, providing heat and/or ventilation and/or air conditioning and/or light and/or shade. The action BMS-point may be configured to perform several building management functions, e.g. the action BMS-point may be configured to provide heat and ventilation. The action BMS-point may be configured to perform several building management functions simultaneously or at different times, e.g. the action BMS-point may be configured to provide heat and ventilation simultaneously, or to provide heat and air conditioning at different times. I.e., different building management functions of the same enforcement BMS-point may be alternative/mutually exclusive, or may be not mutually exclusive.

The signal forwarding method may be performed by a BMS. The BMS may comprise at least the signal forwarding BMS-point, an enforcement BMS-point and an action BMS-point. The enforcement BMS-point may be configured to cause operation of the action BMS-point. The enforcement BMS-point may comprise an instruction receiver configured to receive an instruction signal. The enforcement BMS-point may comprise a wakeup receiver configured to receive a wakeup signal. The enforcement BMS-point may be operable in a low-power mode and in an active mode. The enforcement BMS-point being in the low-power mode may be configured to operate at a lower power consumption as compared to a power consumption of the enforcement BMS-point being in the active mode. In the low-power mode of the enforcement BMS-point, the instruction receiver may be inactive. In the low-power mode of the enforcement BMS-point, the wakeup receiver may be active. In the active mode of the enforcement BMS-point, the instruction receiver may be active. The method may further comprise receiving, e.g. by the wakeup receiver of the enforcement BMS-point, the second signal. The method may further comprise, e.g. upon receiving the second signal, switching the enforcement BMS-point into the active mode. The method may further comprise receiving, e.g. by the instruction receiver of the enforcement BMS-point e.g. being in the active mode, an instruction signal, preferably from an authentication medium or a decision BMS-point. The method may further comprise causing, e.g. by the enforcement BMS-point, e.g. being in the active mode, operation of the action BMS-point, e.g. according to the instruction signal.

This may allow to cause operation of the action BMS-point in an energy-efficient way, by minimizing the time that the instruction receiver is active and consumes more energy as compared to being inactive.

The second signal may be a wakeup signal, i.e. the second signal may comprise an wakeup information that may cause the enforcement BMS-point to switch into the active mode.

The low-power mode of the enforcement BMS-point may be a low-power receiving mode in which the enforcement BMS-point preferably only responds/takes action upon receiving a wakeup signal. Other signals, e.g. instruction signals, may be ignored by the enforcement BMS-point being in the low-power mode, e.g. in order to save energy.

When the wakeup receiver is active, e.g. when the enforcement BMS-point is in the low-power mode or in the active mode, the wakeup receiver may be in a receiving mode and/or in a listening mode. When the instruction receiver is active, e.g. when the enforcement BMS-point is in the active mode, the instruction receiver may be in a receiving mode and/or in a listening mode.

E.g. when being active, the wakeup receiver may be able/may be configured to receive a wakeup signal. E.g. when being active, the instruction receiver may be able/may be configured to receive an instruction signal. E.g. when being inactive, the wakeup receiver may not be able/may not be configured to receive a wakeup signal. E.g. when being inactive, the instruction receiver may not be able/may not be configured to receive an instruction signal.

An inactive component may be a sleeping component and/or a deactivated component. E.g., the wakeup receiver being inactive may be the wakeup receiver when sleeping/when being deactivated. An inactive component may be in a non-operating state. An active component may be in an operating state.

The low-power mode of the enforcement BMS-point may be a mode in which the wakeup receiver is active. The low-power mode of the enforcement BMS-point may be a mode in which the enforcement BMS-point is able/is configured to receive a wakeup signal, via the wakeup receiver.

The active mode of the enforcement BMS-point may be a mode in which the instruction receiver is active. The active mode of the enforcement BMS-point may be a mode in which the enforcement BMS-point is able to receive an instruction signal via the instruction receiver. The active mode of the enforcement BMS-point may be a mode in which the wakeup receiver is active. The active mode of the enforcement BMS-point may be a mode in which the enforcement BMS-point is able to receive a wakeup signal via the wakeup receiver.

In other words: The wakeup receiver may be able to receive a wakeup signal both in the active mode and in the low-power mode of the enforcement BMS-point, i.e. the wakeup receiver may be active both in the active mode and in the low-power mode of the enforcement BMS-point. The instruction receiver e.g. may be able to receive a wakeup signal only in the active mode of the enforcement BMS-point and e.g. not in the low-power mode, i.e. the wakeup receiver e.g. may be active only in the active mode of the enforcement BMS-point and e.g. may be inactive in the low-power mode.

The wakeup receiver e.g. may be always active, i.e. the wakeup receiver may be active when the enforcement BMS-point is in the active mode, and also when the enforcement BMS-point is in the low-power mode.

The wakeup receiver, e.g. being active, may e.g. operate at a lower power consumption as compared to a power consumption of the instruction receiver, e.g. when being active. When inactive, the instruction receiver may have a lower power consumption as compared to the power consumption when being active.

The wakeup receiver may e.g. switch the enforcement BMS-point into the active mode.

Switching the enforcement BMS-point from the low-power mode into the active mode may comprise activating the instruction receiver. In the active mode, the enforcement BMS-point may be able to receive instruction signals, e.g. via the active instruction receiver. In the active mode, the enforcement BMS-point may be able to cause operation of the action BMS-point. When being in the low-power mode, the enforcement BMS-point e.g. may be able to cause operation of the action BMS-point or the enforcement BMS-point e.g. may not be able to cause operation of the action BMS-point.

The second signal may be configured to cause the enforcement BMS-point to switch from the low-power mode into the active mode. The second signal may be configured to cause the enforcement BMS-point to switch its instruction receiver from being inactive to being active.

The inactive instruction receiver of the enforcement BMS-point being in the low-power mode e.g. may not be able/may not be configured to receive an instruction signal. The enforcement BMS-point being in the low-power mode may e.g. not be able to cause operation of the action BMS-point.

This may allow to achieve a particularly low power consumption of the enforcement BMS-point when being in the low-power mode.

The BMS may further comprise a decision BMS-point. The decision BMS-point may be configured to first send the first signal, and subsequently the instruction signal, such that the instruction signal can be received by the active instruction receiver of the first access enforcement point being in the active mode.

The decision BMS-point may be configured to send the instruction for a predetermined amount of time. The decision BMS-point may be connected to a power grid. Thus, sending instructions by the decision BMS-point may not be energy-critical. Sending the instruction for a predetermined time period may enable the enforcement BMS-point to receive an instruction immediately after switching into the active mode. Thus, sending the instruction for a predetermined time period may allow to reduce the energy consumption by the enforcement BMS-point.

The decision BMS-point may be configured to send an instruction comprising a no-action command, e.g. if no intent of a user is determined and/or no signal of an authentication medium of a user is received. Sending an instruction comprising a no-action command may comprise not sending any instruction, i.e. the enforcement BMS-point may be configured to interpret an absence of a received instruction, e.g. after having switched into the active mode, as a no-action command/a no-action instruction.

The method may further comprise, e.g. after causing operation of the action BMS-point according to the instruction signal/according to the second signal, switching the enforcement BMS-point from the active mode into the low-power mode.

The wakeup receiver, e.g. being active, may e.g. be configured to operate at a lower power consumption as compared to a power consumption of the active instruction receiver of the enforcement BMS-point being in the active mode. Optionally, the sensitivity of the wakeup receiver e.g. may be lower than the sensitivity of the active instruction receiver.

This may allow to achieve a particularly low power consumption of the enforcement BMS-point.

The wakeup receiver may have a lower sensitivity as compared to the instruction receiver. The lower sensitivity of the wakeup receiver as compared to the instruction receiver e.g. may allow a lower power consumption of the wakeup receiver as compared to the instruction receiver.

E.g., the wakeup receiver may have a higher receiving threshold as compared to the instruction receiver. The receiving threshold may correspond to the minimal signal level/minimal signal amplitude/minimal signal strength that can be received and processed by a respective receiver. In other words: A receiver may not be able to receive/to process/to react upon a signal that has a signal level/a signal amplitude/a signal strength that is below a receiving threshold of the respective receiver.

Wakeup signals may have a signal strength above the receiving threshold of the wakeup receiver. Instruction signals may have a signal strength below the receiving threshold of the wakeup receiver, but e.g. above the receiving threshold of the instruction receiver.

The wakeup receiver and the instruction receiver may e.g. use different communication protocols. E.g., the wakeup receiver may use a communication protocol that may be particularly energy efficient, e.g. that consumes less energy as compared to a communication protocol used by the instruction receiver. The instruction receiver may e.g. use a communication protocol that may allow a higher information transmission rate. A wakeup signal may be a rather simple signal as it may only be intended to wake up a particular enforcement BMS-point. An instruction signal may be a more complex signal as compared to a wakeup signal, as an instruction signal may cause a respective enforcement BMS-point to cause operation of a respective action BMS-point. Accordingly, an instruction signal may require a higher security level as compared to a wakeup signal.

The term "communication protocol" generally refers to "a system of rules that allows information transmission". It may in particular e.g. refer to used bandwidths, to various types of information encoding, to carrier frequencies, to modulation types, signal amplitudes/signal levels and/or communication ranges.

The wakeup receiver may e.g. use on-off keying. The instruction receiver may e.g. use LoRa.

The instruction receiver may have a longer receiving range as compared to the wakeup receiver. In other words: The instruction receiver may be able to receive a signal that was send from a distant location, while a wakeup receiver might not be able to receive a signal sent from the same location, e.g. due to the signal strength being too low.

E.g., the wakeup receiver may not be able to directly receive a signal sent from a decision BMS-point, e.g. as the decision BMS-point may be too far away such that a signal strength of the signal directly sent from the decision BMS-point may be below a receiving threshold of the wakeup receiver. However, a signal strength of a signal sent from a signal forwarding BMS-point that is closer to the enforcement BMS-point may have a signal strength above the receiving threshold of the wakeup receiver. Hence, it may still be possible to switch an enforcement BMS-point into the active mode based on a first signal whose strength is below the receiving threshold of the wakeup receiver of the enforcement BMS-point, i.e. via the second signal. Since the active instruction receiver may have a better sensitivity/a lower receiving threshold, the active instruction receiver still may be able to receive instruction signals directly sent from the decision BMS-point.

In some embodiments, sending the second signal e.g. may only be performed under the condition that no other signal corresponding to the first signal was received by the signal forwarding BMS-point within a predetermined time period before receiving the first signal. The first signal may include designation information e.g. indicating a designated enforcement BMS-point. The second signal may include the designation information of the first signal. In some embodiments, sending the second signal optionally e.g. may only be performed under the condition that no other signal including the same designation information as included in the first signal was received by the signal forwarding BMS-point within a predetermined time period before receiving the first signal.

The predetermined time period may be adjustable, e.g. dynamically adjustable.

It may be unlikely that a signal forwarding BMS-point may be intended to forward two signals within short time intervals, e.g. within a few seconds or milliseconds. Thus, the predetermined time period may allow to prevent "ping-pong" signal forwarding, where multiple signal forwarding BMS-points forward signals in a "snowball system", causing more and more signals. Hence, the predetermined time period may prevent "excessive" signal forwarding.

The designated enforcement BMS-point may be an enforcement BMS-point that is intended to be addressed by the first signal and/or by signals based on the first signal. The designation information may comprise a designation address, e.g. a designation address indicating the designated enforcement BMS-point. The designation information may comprise a designation code. It may be determined whether the first signal is designated to a specific enforcement BMS-point, e.g. by checking, e.g. by the specific enforcement BMS-point, whether the designation code matches a predetermined condition.

Designation information may be especially useful in case of a BMS comprising a plurality of enforcement BMS-points and/or a plurality of signal forwarding BMS-points, and/or in case of a signal forwarding BMS-point that is configured to communicate/to send signals to a plurality of enforcement BMS-points and/or to a plurality of signal forwarding BMS-points.

The second signal may comprise an address of the signal forwarding BMS-point that generated the second signal. E.g., the second signal may be the same as the first signal with the address of the signal forwarding BMS-point added to the first signal. This may allow to prevent that the signal forwarding BMS-point sends a further n+1th signal in response to receiving an nth signal (n being larger than two), i.e. this may allow to prevent "ping-pong" repeating. This may be especially beneficial in case of a BMS comprising a plurality of signal forwarding BMS-points.

The signal forwarding BMS-point may comprise a whitelist and/or a blacklist of addresses of enforcement BMS-points. Sending the second signal may be performed only if the designation information matches a blacklist/whitelist criterion. E.g., the second signal may be only sent if the designation information matches an entry of the whitelist, and/or the second signal may not be sent if the designation information matches an entry of the blacklist.

In order to avoid ping-pong signal forwarding, the signal forwarding BMS-point may also comprise a counter that is decremented when sending a signal, and sending the second signal may only be performed if the counter is above a predetermined threshold.

The enforcement BMS-point may comprise an access enforcement point. The action BMS-point may comprise an access point. Preferably, the access point may comprise a lock of a postbox and/or a parcel box and/or a door and/or an automatic door and/or a lockable piece of furniture and/or an access restricted trigger mechanism.

The enforcement BMS-point may comprise the action BMS-point. The enforcement BMS-point and the action BMS-point may be comprised in the same device.

The enforcement BMS-point may be configured to cause operation of a plurality of action BMS-points. The enforcement BMS-point may comprise the plurality of action BMS-points which are configured to be operated by the enforcement BMS-point. The enforcement BMS-point and the plurality of action BMS-points may be comprised in the same device.

The enforcement BMS-point may comprise an access enforcement point and the action BMS-point may comprise an access point. Operation of the access point may comprise unlocking or locking of the access point, and/or opening/closing of the access point, e.g. in case of the access point comprising an automatic door. The access point may comprise an actuator. The lock may be an electronic lock.

An access restricted trigger mechanism may be provided at an elevator, wherein operation of/(un)locking the access restricted trigger mechanism may cause the elevator to perform a predetermined action, e.g., moving to a specific floor or locking the elevator while keeping the elevator door open.

The enforcement BMS-point may comprise a heating enforcement point and the action BMS-point may comprise a heating point. Operation of the heating point may comprise increasing or lowering a temperature of the heating point and/or turning a heating on or off. The heating point may be a heating of any kind, e.g. an underfloor heating, a radiator, an IR heating.

The enforcement BMS-point may comprise a ventilation enforcement point and the action BMS-point may comprise a ventilation point. Ventilation may refer to the process of exchanging or replacing air, e.g. in a room or in a building, e.g. to provide high indoor air quality. Ventilation may involve temperature control and/or oxygen replenishment and/or and removal of moisture/odors/smoke/ heat/dust/airborne bacteria/carbon dioxide/other gases. Ventilation may remove unpleasant smells and/or excessive moisture. Ventilation may introduce outside air. Ventilation may keep interior building air circulating. Ventilation may prevent stagnation of the interior air. Operation of the ventilation point may e.g. comprise increasing/decreasing an air flow/a ventilation and/or turning an air flow/a ventilation on or off.

The enforcement BMS-point may comprise an air conditioning enforcement point and the action BMS-point may comprise an air conditioning point. Operation of the air conditioning point may e.g. comprise increasing/decreasing a desired temperature and/or turning air conditioning on or off.

The enforcement BMS-point may comprise a lighting enforcement point and the action BMS-point may comprise a lighting point. Operation of the lighting point may e.g. comprise increasing/decreasing a brightness, changing a light color or temperature, and/or turning lighting on or off.

The enforcement BMS-point may comprise a shading enforcement point and the action BMS-point may comprise a shading point. Operation of the shading point may e.g. comprise adjusting a shading degree, and/or turning shading on or off.

The signal forwarding BMS-point may comprise a second enforcement BMS-point.

The second enforcement BMS-point may be different from the enforcement BMS-point (which may also be referred to as "first enforcement BMS-point" in the following).

This may also allow for the signal forwarding BMS-point to fulfill different functions, i.e. to forward signals and to also cause operation of a specific action BMS-point. Thereby, the need for additional signal forwarding BMS-points may be overcome, and/or this may allow to reduce the number of signal forwarding BMS-points.

The second enforcement BMS-point may be configured to cause operation of a corresponding action BMS-point, e.g. a second action BMS-point, e.g. according to a received signal, e.g. from the signal-forwarding BMS-point. The second enforcement BMS-point may be configured to receive a signal, e.g. sent from the signal forwarding BMS-point.

The second action BMS-point may be of the same category as the enforcement BMS-point (in the following also referred to as "first enforcement BMS-point"), or may be of a different category as compared to the first enforcement BMS-point. As an example, the first enforcement BMS-point may be configured to cause operation of a first access point, and the second enforcement BMS-point may be configured to cause operation of a corresponding second access point, or the second enforcement BMS-point may be configured to cause operation of a corresponding lighting point.

The second enforcement BMS-point may be operable in a low-power mode and may be operable in an active mode. The second enforcement BMS-point being in the low-power mode may be configured to operate at a lower power consumption as compared to a power consumption of the second enforcement BMS-point being in the active mode.

The second enforcement BMS-point may be configured to cause operation of a corresponding action BMS-point, e.g. when being in the active mode.

The second enforcement BMS-point may comprise a wakeup receiver that may be configured to receive a wakeup signal. The second enforcement BMS-point may comprise a transmitter that may be configured to send a signal, e.g. a wakeup signal. The second enforcement BMS-point may comprise an instruction receiver configured to receive an instruction signal.

The receiver of the signal forwarding BMS-point may be configured to receive a wakeup signal. The receiver of the signal forwarding BMS-point may be the wakeup receiver of the second enforcement BMS-point.

The transmitter of the second enforcement BMS-point may be the transmitter of the signal forwarding BMS-point, i.e. the transmitter of the second enforcement BMS-point may be configured to send the second signal.

In the low-power mode of the second enforcement BMS-point, the wakeup receiver may be active. In the low-power mode of the second enforcement BMS-point, the instruction receiver may be inactive. In the low-power mode of the second enforcement BMS-point, the transmitter may be inactive. In the active mode of the second enforcement BMS-point, the instruction receiver may be active. In the active mode of the second enforcement BMS-point, the transmitter may be active.

The second BMS-enforcement point may be configured to, e.g. upon receiving a signal by the wakeup receiver of the second BMS-enforcement point, to switch the second enforcement BMS-point into the active mode.

The second BMS-enforcement point may be configured to receive, e.g. by the active wakeup receiver of the second BMS-enforcement point being in the active mode, an instruction signal.

The second BMS-enforcement point may be configured to, e.g. being in the active mode, to cause operation of the corresponding action BMS-enforcement point according to the instruction signal.

Features and functionalities disclosed with respect to the first enforcement BMS-point may e.g. apply to the second enforcement BMS-point as applicable. The second enforcement BMS-point may have the same respective functionalities as the first enforcement BMS-point. The second enforcement BMS-point may be configured in the same manner as the first enforcement BMS-point.

The second enforcement BMS-point e.g. may be configured to cause operation of an action BMS-point of a different category, but e.g. may otherwise have the same features and functionalities as the first enforcement BMS-point.

The signal forwarding BMS-point and/or the enforcement BMS-point and/or the decision BMS-point may be respectively configured to send and/or receive signals wirelessly.

In other words: First signals and/or second signals and/or wakeup signals and/or instruction signals may be wireless signals.

The signal forwarding BMS-point and/or the enforcement BMS-point and/or the decision BMS-point may be respectively configured to send and/or receive signals via ultra-wideband transmissions and/or Bluetooth transmissions.

According to a second aspect of the present invention, a building management system, hereinafter referred to as BMS, is provided. The BMS may comprise a signal forwarding BMS-point comprising energy harvesting means. The BMS may comprise an enforcement BMS-point. The BMS may comprise an action BMS-point. The enforcement BMS-point may comprise a receiver. The signal forwarding BMS-point may be configured to receive a first signal, preferably from an authentication medium and/or a decision BMS-point. The signal forwarding BMS-point may be configured to send a second signal, which may be based on the first signal. The second signal may preferably correspond to the first signal. The enforcement BMS-point may be configured to receive, e.g. by its receiver, the second signal. The enforcement BMS-point may be configured to cause operation of the action BMS-point, e.g. according to the second signal. More preferably, the BMS may be configured to be used in/to perform the computer-implemented signal forwarding method according to the first aspect of the present invention.

The decision BMS-point may be configured to receive a zeroth a zeroth signal from the authentication medium or from a sensor device. The decision BMS-point may be configured to send the first signal based on the zeroth signal. The decision BMS-point may e.g. generate the first signal based on the zeroth signal, e e.g. based on a credential or based on sensing information comprised in the zeroth signal.

In some embodiments of the present invention, a validity of the credential may be determined, e.g. by the decision BMS-point, prior to sending the first signal, and sending the first signal, e.g. by the decision BMS-point, may only be performed upon determining that the credential is valid.

According to a third aspect of the present invention, a signal forwarding BMS-point is provided. The signal forwarding BMS-point may comprise energy harvesting means. The signal forwarding BMS-point may be configured to receive a first signal, preferably from an authentication medium and/or a decision BMS-point. The signal forwarding BMS-point may be configured to send a second signal. The second signal may be based on the first signal. The second signal may preferably correspond to the first signal. Optionally, the signal forwarding BMS-point may be configured to be used in/to perform the computer-implemented signal forwarding method according to the first aspect of the present invention.

According to a fourth aspect of the present invention, a use of the signal forwarding BMS-point according to the third aspect of the present invention in the computer-implemented signal forwarding method according to the first aspect of the present invention is provided.

According to a fifth aspect of the present invention, a computer program is provided. The computer program comprises computer-readable instructions which when executed by a data processing apparatus, preferably being the signal forwarding BMS-point according to the third aspect of the present invention, cause the data processing apparatus to perform the computer-implemented method according to the first aspect of the present invention.

All technical implementation details and advantages described with respect to the first aspect of the present invention are self-evidently mutatis mutandis applicable for the second, third, fourth and fifth aspects of the present invention and vice versa.

### BRIEF DESCRIPTION OF THE DRAWINGS

The present invention will be explained in more detail, by way of example, with reference to the drawings in which:
- Figure 1: is a schematic top view of a building comprising a plurality of signal forwarding BMS-points that implement a signal forwarding method according to embodiments of the present invention.
- Figure 2: is a high-level flow chart diagram illustrating a sequence of a signal forwarding method according to embodiments of the present invention.
- Figure 3: is a high-level flow chart diagram illustrating another sequence of a signal forwarding method according to embodiments of the present invention.
- Figure 4: is a high-level flow chart diagram illustrating another sequence of a signal forwarding method according to embodiments of the present invention.
- Figure 5: is a highly schematic drawing of a BMS according to embodiments of the present invention.

### FIGURATIVE DESCRIPTION OF EMBODIMENTS

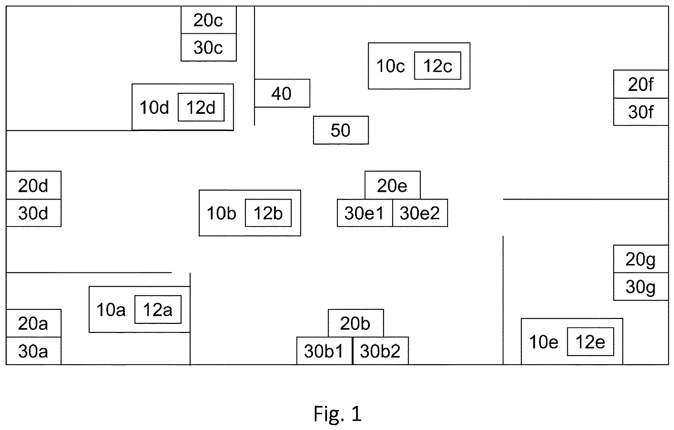

Reference will now be made to exemplary embodiments of the invention, examples of which are illustrated in the accompanying figures. Wherever possible, the same reference numbers will be used throughout the drawings to refer to the same or like parts. Moreover, the features explained in context of a specific embodiment, for example that one of Figure 1, also apply to any one of the other embodiments, when appropriate, unless differently described.

In the description of Figure 1, the reference signs 10a, 10b, 10c, 10d, 10e are abbreviated as 10a, ..., 10e; the reference signs 12a, 12b, 12c, 12d, 12e are abbreviated as 12a, ..., 12e; the reference signs 20a, 20b, 20c, 20d, 20e, 20f, 20g are abbreviated as 20a, ..., 20g; and the reference signs 30a, 30b, 30c, 30d, 30e, 30f, 30g are abbreviated as 30a, ..., 30g. Lowercase letters may be used to denote individual members generally having the same or similar functionalities. E.g., 10a and 10b may denote a first and a second signal forwarding BMS-point, respectively.

Figure 1 is a schematic top view of a building comprising a plurality of signal forwarding BMS-points that implement a signal forwarding method according to embodiments of the present invention.

The building comprises a BMS comprising a plurality of signal forwarding BMS-points 10a, ..., 10e, a plurality of enforcement BMS-points 20a, ..., 20g, a plurality of action BMS-points 30a, ..., 30g, a decision BMS-point 40 and an authentication medium 50. The BMS implements a signal forwarding method according to embodiments of the present invention.

Each of the signal forwarding BMS-points 10a, ..., 10e comprises respective energy harvesting means 12a, ..., 12e. The energy harvesting means 12a, ..., 12e are configured to harvest energy and to provide the harvested energy to the corresponding signal forwarding BMS-point 10a, ..., 10e.

Each of the signal forwarding BMS-points 10a, ..., 10e is configured to receive a first signal, and to send a second signal that is based on the first signal. The second signal may correspond to the first signal.

Each of the enforcement BMS-points 20a, ..., 20g is configured to cause operation of a corresponding action BMS-point 30a, ..., 30g. An enforcement BMS-point may also be configured to cause operation of a plurality of action BMS-points, e.g. of a lighting point and of a heating point, cf. enforcement BMS-points 20e and 20b with corresponding action BMS-points 30e1, 30e2 and 30b1, 30b2, respectively.

The first signal may e.g. be received from the decision BMS-point 40 and/or from the authentication medium 50. The authentication medium 50 may be the authentication medium of a user (not shown in Fig. 1). E.g., the decision BMS-point 40 may receive a signal from the authentication medium 50, and may then send a first signal that may be based on the signal received from the authentication medium 50. The decision BMS-point 40 may check the validity of a credential of the signal of the authentication medium 50.

An enforcement BMS-point, e.g. enforcement BMS-point 20a, may be out of reach of the decision BMS-point 40. A first signal sent by the decision point 40 may be received by the signal forwarding BMS-point 10a. The signal forwarding BMS-point 10a may harvest energy by its energy harvesting means 12a. The signal forwarding BMS-point 10a may send a second signal based on the first signal. The second signal may be received by the enforcement BMS-point 20a, which is configured to cause operation of the action BMS-point 30a. The action BMS-point 30a may e.g. be an access point or a lighting point or a heating point. The enforcement BMS-point 20a may cause operation of the action BMS-point 30a according to the second signal.

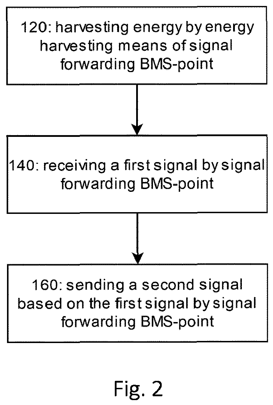

Figure 2 is a high-level flow chart diagram illustrating a sequence of a signal forwarding method according to embodiments of the present invention.

In step 120, energy is harvested by the energy harvesting means 12 of the signal forwarding BMS-point 10, and the harvested energy is provided to the signal forwarding BMS-point 10. In step 140, the signal forwarding BMS-point 10 receives a first signal, e.g. from a decision BMS-point 40 or an authentication medium 50. In step 160, the signal forwarding BMS-point 10 sends a second signal, which is based on the first signal.

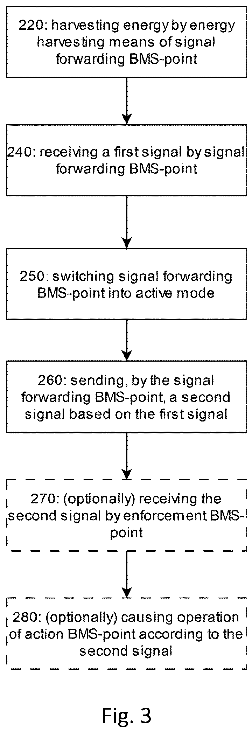

Figure 3 is a high-level flow chart diagram illustrating another sequence of a signal forwarding method according to embodiments of the present invention.

In step 220, energy is harvested by the energy harvesting means 12 of the signal forwarding BMS-point 10, and the harvested energy is provided to the signal forwarding BMS-point 10. In step 240, the signal forwarding BMS-point 10 receives a first signal, e.g. from a decision BMS-point 40 or an authentication medium 50.

The signal-forwarding BMS-point 10 is operable in a low-power mode and in an active mode. The signal-forwarding BMS-point 10 being in the low-power mode is configured to operate at a lower power consumption as compared to a power consumption of the signal forwarding BMS-point 10 being in the active mode. The signal forwarding BMS-point 10 comprises a receiver (active in the low-power mode) configured to receive a signal and a transmitter (inactive in the low-power mode and active in the active mode) configured to send a signal.

In step 240, the first signal is received by the signal forwarding BMS-point 10. In step 250, the signal forwarding BMS-point 10 is switched into the active mode, upon receiving (step 240) the first signal. The second signal, based on the first signal, is then send (step 260) by the active transmitter of the signal forwarding BMS-point 10 being in the active mode.

In optional step 270, the enforcement BMS-point 20 may receive the second signal. In optional step 280, the enforcement BMS-point 20 may cause operation of the corresponding action BMS-point 30, according to the second signal. Causing operation of the action BMS-point 30 may e.g. comprise turning lighting on or off, e.g. in case the action BMS-point 30 comprises a lighting point.

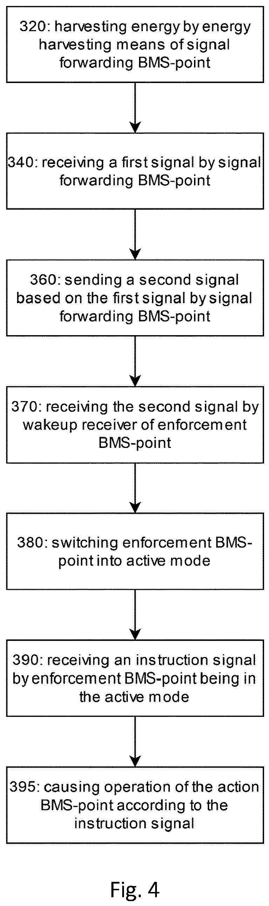

Figure 4 is a high-level flow chart diagram illustrating another sequence of a signal forwarding method according to embodiments of the present invention.

In step 320, energy is harvested by the energy harvesting means 12 of the signal forwarding BMS-point 10, and the harvested energy is provided to the signal forwarding BMS-point 10. In step 340, the signal forwarding BMS-point 10 receives a first signal, e.g. from a decision BMS-point 40 or an authentication medium 50.

The second signal, based on the first signal, is then send (step 360) by the signal forwarding BMS-point 10.

The enforcement BMS-point 20 comprises an instruction receiver and a wakeup receiver. The enforcement BMS-point 20 is operable in a low-power mode (wakeup receiver active, instruction receiver inactive) and in an active mode (instruction receiver active).

In step 370, the wakeup receiver of the enforcement BMS-point 20 being in the low-power mode receives the second signal. In step 380, the enforcement BMS-point 20 is switched into the active mode. In step 390, the active instruction receiver of the enforcement BMS-point 20 being in the active mode receives an instruction signal. In step 395, the enforcement BMS-point 20 being in the active mode causes operation of the action BMS-point 30 according to the instruction signal.

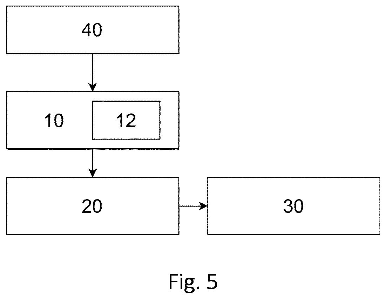

Figure 5 is a highly schematic drawing of a BMS according to embodiments of the present invention.

The signal forwarding BMS-point 10 comprises energy harvesting means 12. The signal forwarding BMS-point 10 is configured to receive a first signal, e.g. from decision BMS-point 40. The signal forwarding BMS-point 10 is configured to send a second signal, which may be based on the first signal. The second signal may be received by the enforcement BMS-point 20. The enforcement BMS-point 20 may be configured to cause operation of the action BMS-point 30, e.g. according to the second signal.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 10: signal forwarding BMS-point
- 12: energy harvesting means
- 20: enforcement BMS-point
- 30: action BMS-point
- 40: decision BMS-point
- 50: authentication medium

## Claims

1. A computer-implemented signal forwarding method for a building management system, hereinafter referred to as BMS, the method being performed at least by a signal forwarding BMS-point (10) comprising energy harvesting means (12), wherein the method comprises:
harvesting (120) energy, by the energy harvesting means (12), and providing the harvested energy to the signal forwarding BMS-point (10),
receiving (140), by the signal forwarding BMS-point (10), a first signal, and
sending (160), by the signal forwarding BMS-point (10), a second signal based on the first signal, the second signal preferably corresponding to the first signal.

2. The computer-implemented signal forwarding method according to claim 1,
wherein the energy harvesting means (12) comprise an energy storage,
wherein preferably the energy harvesting means comprise a solar cell and/or a motion-energy based energy generator,
wherein preferably, the signal forwarding BMS-point (10) is not connected to a power grid.

3. The computer-implemented signal forwarding method according to any one of the preceding claims, wherein the first signal is received from an authentication medium (50), preferably a mobile device or a physical key card, and/or from a decision BMS-point (40) and/or from a sensor device.

4. The computer-implemented signal forwarding method according to any one of the preceding claims, wherein the signal forwarding method is performed at least by the signal forwarding BMS-point (10a) and by a second signal forwarding BMS-point (10b) comprising energy harvesting means (12b),
wherein the method further comprises:
receiving, by the second signal forwarding BMS-point (10b), the second signal, and
sending, by the second signal forwarding BMS-point (10b), a third signal based on the second signal, the third signal preferably corresponding to the second signal.

5. The computer-implemented signal forwarding method according to any one of the preceding claims,
wherein the signal forwarding BMS-point (10) is operable in a low-power mode and in an active mode,
wherein the signal forwarding BMS-point (10) being in the low-power mode is configured to operate at a lower power consumption as compared to a power consumption of the signal forwarding BMS-point (10) being in the active mode,
wherein the signal forwarding BMS-point (10) comprises a receiver configured to receive a signal and a transmitter configured to send a signal,
wherein in the low-power mode of the signal forwarding BMS-point (10), the transmitter is inactive and the receiver is active, and wherein in the active mode of the signal forwarding BMS-point, the transmitter is active,
wherein the method further comprises:
upon receiving the first signal, switching (250) the signal forwarding BMS-point (10) from the low-power mode into the active mode, and wherein sending the second signal is performed by the active transmitter of the signal forwarding BMS-point (10) being in the active mode.

6. The computer-implemented signal forwarding method according to any one of the preceding claims, wherein the signal forwarding method is performed by a BMS comprising at least the signal forwarding BMS-point (10), an enforcement BMS-point (20) and an action BMS-point (30), the action BMS-point (30) preferably comprising an actuator and preferably comprising a lock,
wherein the enforcement BMS-point (20) is configured to cause operation of the action BMS-point (30),
wherein the enforcement BMS-point (20) comprises a receiver,
wherein the method further comprises: receiving (270) the second signal by the receiver of the enforcement BMS-point (20),
wherein the method preferably further comprises: causing (280), by the enforcement BMS-point (20), operation of the action BMS-point (30) according to the second signal.

7. The computer-implemented signal forwarding method according to any one of claims 1 to 5, wherein the signal forwarding method is performed by a BMS comprising at least the signal forwarding BMS-point (10), an enforcement BMS-point (20) and an action BMS-point (30), wherein the enforcement BMS-point (20) is configured to cause operation of the action BMS-point (30),
wherein the enforcement BMS-point (20) comprises an instruction receiver configured to receive an instruction signal and a wakeup receiver configured to receive a wakeup signal,
wherein the enforcement BMS-point (20) is operable in a low-power mode and in an active mode, wherein the enforcement BMS-point (20) being in the low-power mode is configured to operate at a lower power consumption as compared to a power consumption of the enforcement BMS-point (20) being in the active mode,
wherein in the low-power mode of the enforcement BMS-point (20), the instruction receiver is inactive and the wakeup receiver is active, and wherein in the active mode of the enforcement BMS-point (20), the instruction receiver is active,
wherein the method further comprises:
receiving (370), by the wakeup receiver of the enforcement BMS-point (20), the second signal,
upon receiving the second signal, switching (380) the enforcement BMS-point (20) into the active mode,
receiving (390), by the instruction receiver of the enforcement BMS-point (20) being in the active mode, an instruction signal, preferably from an authentication medium (50) or a decision BMS-point (40), and
causing (395), by the enforcement BMS-point (20), operation of the action BMS-point (30) according to the instruction signal.

8. The computer-implemented signal forwarding method according to any one of the preceding claims, wherein sending the second signal is only performed under the condition that no other signal corresponding to the first signal was received by the signal forwarding BMS-point (10) within a predetermined time period before receiving the first signal, and/or
wherein claim 8 depends on claim 6 or claim 7 and wherein the first signal includes designation information indicating a designated enforcement BMS-point and wherein the second signal includes the designation information of the first signal, and wherein sending the second signal optionally is only performed under the condition that no other signal including the same designation information as included in the first signal was received by the signal forwarding BMS-point (10) within a predetermined time period before receiving the first signal.

9. The computer-implemented signal forwarding method according to any one of the preceding claims, wherein the enforcement BMS-point (20) comprises an access enforcement point and wherein the action BMS-point (30) comprises an access point,
wherein preferably, the access point (30) comprises a lock of a postbox and/or a parcel box and/or a door and/or an automatic door and/or a lockable piece of furniture and/or an access restricted trigger mechanism.

10. The computer-implemented signal forwarding method according to any one of the preceding claims, wherein a the signal forwarding BMS-point (10) comprises a second enforcement BMS-point (20b).

11. The computer-implemented signal forwarding method according to any one of the preceding claims, wherein the signal forwarding BMS-point (10) and/or the enforcement BMS-point (20) and/or the decision BMS-point (30) is respectively configured to send and/or receive signals wirelessly.

12. A building management system, hereinafter referred to as BMS, comprising a signal forwarding BMS-point (10) comprising energy harvesting means (12), an enforcement BMS-point (20) and an action BMS-point (30), wherein the enforcement BMS-point (20) comprises a receiver,
wherein the signal forwarding BMS-point (10) is configured to receive a first signal, preferably from an authentication medium (50) and/or a decision BMS-point (40), and to send a second signal based on the first signal, the second signal preferably corresponding to the first signal,
wherein the enforcement BMS-point (20) is configured to receive, by its receiver, the second signal, and
wherein the enforcement BMS-point (20) is configured to cause operation of the action BMS-point (30) according to the second signal,
wherein more preferably, the BMS is configured to be used in the computer-implemented signal forwarding method according to any one of claims 1 to 11.

13. A signal forwarding BMS-point comprising energy harvesting means, wherein the signal forwarding BMS-point (10) is configured to receive a first signal, preferably from an authentication medium (50) and/or a decision BMS-point (40), and to send a second signal, the second signal being based on the first signal, preferably the second signal corresponding to the first signal,
optionally, the signal forwarding BMS-point (10) being configured to be used in the computer-implemented signal forwarding method according to any one of claims 1 to 11.

14. Use of the signal forwarding BMS-point (10) according to claim 13 in the computer-implemented signal forwarding method according to any of claims 1 to 11.

15. A computer program comprising computer-readable instructions which when executed by a data processing apparatus, preferably being the signal forwarding BMS-point (10) according to claim 13, cause the data processing apparatus to perform the computer-implemented method according to any of claims 1 to 11.
